# EUROPÄISCHE PATENTANMELDUNG

(11) **EP 4 530 832 A1**
(43) Veröffentlichungstag der Anmeldung: **02.04.2025**
(21) Anmeldenummer: 23200611.4
(22) Anmeldetag: 28.09.2023
(51) Int. Cl.: G06F 8/72, G06N 20/00

(54) **AUTOMATISIERTE REFAKTORIERUNG VON CODE EINER EMBEDDED SOFTWARE**

(71) Anmelder: Robert Bosch GmbH, 70442 Stuttgart (DE)
(72) Erfinder: Schlund, Maximilian, 71034 Boeblingen (DE); Quante, Jochen, 71640 Ludwigsburg (DE); Woehrle, Matthias, 74321 Bietigheim-Bissingen (DE); Hecking-Harbusch, Jesko, 71229 Leonberg (DE); Sierra Loaiza, Sebastian Ernesto, 04107 Leipzig (DE)

(57) **Zusammenfassung**

Ein erster Aspekt der vorliegenden Offenbarung betrifft ein computer-implementiertes Verfahren für die automatisierte Refaktorierung von Code einer Software, umfassend Refaktorieren, via ein Maschinenlernmodell, des Code der Software zumindest basierend auf dem Code und einem Prompt, wobei der Code refaktoriert wird; und Bewerten des refaktorierten Code, wobei ein Bewertungsergebnis resultiert. Ein zweiter Aspekt der vorliegenden Offenbarung betrifft ein computer-implementiertes Verfahren zum weiteren Trainieren eines Maschinenlernmodells und/oder weiteren Maschinenlernmodells, wobei das Maschinenlernmodell dafür ausgelegt ist, einen Code einer Software zumindest basierend auf dem Code und einem Prompt zu refaktorieren und das weitere Maschinenlernmodell dafür ausgelegt ist, mindestens einen Refaktorierungsvorschlag zur Refaktorierung des Code zumindest basierend auf dem Code und einem weiteren Prompt zu erzeugen; das Verfahren umfassend Anpassen des Maschinenlernmodells und/oder weiteren Maschinenlernmodells zumindest basierend auf mindestens einem refaktorierten Code und mindestens einem Bewertungsergebnis, wobei das mindestens eine Bewertungsergebnis durch Bewerten des mindestens einen refaktorierten Code resultiert.

## Beschreibung

### Stand der Technik

Embedded Software wird zum Steuern, Regeln und/oder Überwachen technischer Systeme, insbesondere cyber-physischer Systeme wie z.B. Recheneinheiten eines Fahrzeugs und/oder eines Roboters, eingesetzt und weist üblicherweise einen hohen Komplexitätsgrad auf. Aufgrund dessen ist es für einzelne Software-Ingenieure und selbst für ganze Software-Entwicklungsabteilungen herausfordernd, den Überblick über die Software und ihre Änderungen, insbesondere in ihrem gesamten Lebenszyklus (Entwicklung, Test, Produktion und Wartung) zu behalten.

Refaktorierung von Code (englisch: refactoring) bezeichnet in der Software-Entwicklung Strukturverbesserungen von Code unter Beibehaltung des beobachtbaren Programmverhaltens, d.h. der Funktionalität. Dabei sollen zum Beispiel Lesbarkeit, Verständlichkeit, Wartbarkeit und/oder Erweiterbarkeit verbessert werden, mit dem Ziel, den jeweiligen Aufwand für Fehleranalyse und/oder funktionale Erweiterungen zu senken. Typische Refaktorierungen sind z.B. Umbenennung von Variablen in sprechendere Namen und/oder die Extraktion von Codeteilen in eigene Methoden. Durch das Refaktorieren wird die Qualität des Code, mithin der Software erhöht. Allerdings müssen Refaktorierungsmöglichkeiten erst einmal identifiziert werden und dann die dazugehörige Refaktorierung fehlerfrei durchgeführt werden. Aufgrund des hohen Komplexitätsgrad der Software, die sich zudem häufig ändern kann, und gerade, wenn verschiedene Software-Ingenieure an dem Code arbeiten, wäre es wünschenswert, den Code mit möglichst geringem Aufwand und wann immer nötig refaktorieren zu können.

Da Funktionalität und Sicherheit des technischen Systems stets gewährleistet sein müssen, muss der Code der Software entsprechend validiert und/oder verifiziert (V & V) werden. Insbesondere müssen Refaktorierungen des Code stets verlässlich sein.

Der Offenbarung liegt daher das Problem zugrunde automatisiert, aber dennoch verlässlich Code einer Software zu refaktorieren, insbesondere um die Software zu verbessern.

### Offenbarung der Erfindung

Ein erster allgemeiner Aspekt der vorliegenden Offenbarung betrifft ein computer-implementiertes Verfahren für die automatisierte Refaktorierung von Code einer Software. Das Verfahren umfasst Refaktorieren, via ein Maschinenlernmodell, des Code der Software zumindest basierend auf dem Code und einem Prompt, wobei der Code refaktoriert wird. Das Verfahren umfasst weiterhin Bewerten des refaktorierten Code, wobei ein Bewertungsergebnis resultiert.

Die Software kann dafür ausgelegt sein, ein technisches System, insbesondere ein cyber-physisches System, insbesondere mindestens eine Recheneinheit eines Fahrzeugs, zu steuern, zu regeln und/oder zu überwachen. Insbesondere kann die Software eine embedded Software sein. Das Verfahren kann Ausführen des (ggf. kompilierten) refaktorierten Code, mithin der Software umfassen. Das Verfahren kann in einer elektronischen Programmierumgebung ausgeführt werden.

Ein zweiter allgemeiner Aspekt der vorliegenden Offenbarung betrifft ein computer-implementiertes Verfahren zum weiteren Trainieren eines Maschinenlernmodells und/oder weiteren Maschinenlernmodells, wobei das Maschinenlernmodell dafür ausgelegt ist, einen Code einer Software zumindest basierend auf dem Code und einem Prompt zu refaktorieren, und das weitere Maschinenlernmodell dafür ausgelegt ist, mindestens einen Refaktorierungsvorschlag zur Refaktorierung des Code zumindest basierend auf dem Code und einem weiteren Prompt zu erzeugen, wobei das Verfahren Anpassen des Maschinenlernmodells und/oder weiteren Maschinenlernmodells zumindest basierend auf mindestens einem refaktorierten Code und mindestens einem Bewertungsergebnis umfasst, wobei das mindestens eine Bewertungsergebnis durch Bewerten des mindestens einen refaktorierten Code resultiert. Das Verfahren nach dem zweiten allgemeinen Aspekt (oder einer Ausführungsform) kann, muss aber nicht nach dem Verfahren nach dem ersten allgemeinen Aspekt (oder einer Ausführungsform davon) ausgeführt werden.

Ein dritter allgemeiner Aspekt der vorliegenden Offenbarung betrifft ein Computer-System, das dafür ausgelegt ist, das computer-implementierte Verfahren für die automatisierte Refaktorierung von Code einer Software nach dem ersten allgemeinen Aspekt (oder einer Ausführungsform davon) und/oder das computer-implementierte Verfahren zum weiteren Trainieren eines Maschinenlernmodells und/oder weiteren Maschinenlernmodells nach dem zweiten allgemeinen Aspekt (oder einer Ausführungsform davon) auszuführen.

Ein vierter allgemeiner Aspekt der vorliegenden Offenbarung betrifft ein Computer-Programm, das dafür ausgelegt ist, das computer-implementierte Verfahren für die automatisierte Refaktorierung von Code einer Software nach dem ersten allgemeinen Aspekt (oder einer Ausführungsform davon) und/oder das computer-implementierte Verfahren zum weiteren Trainieren eines Maschinenlernmodells und/oder weiteren Maschinenlernmodells nach dem zweiten allgemeinen Aspekt (oder einer Ausführungsform davon) auszuführen.

Ein fünfter allgemeiner Aspekt der vorliegenden Offenbarung betrifft ein computer-lesbares Medium oder Signal, das das Computer-Programm nach dem vierten allgemeinen Aspekt (oder einer Ausführungsform davon) speichert und/oder enthält.

Das in dieser Offenbarung vorgeschlagene Verfahren nach dem ersten Aspekt (oder einer Ausführungsform davon) ist auf die automatisierte Refaktorierung von Code einer Software gerichtet. Durch das hier vorgeschlagene Verfahren kann die Qualität des Code, mithin der Software erhöht werden. Dies wird zum einen durch das Maschinenlernmodell mit einem hinreichend großen Maschinensprachverständnis und zum anderen durch das automatisierte Bewerten des refaktorierten Code nach etablierten V & V Methoden erreicht. Dadurch kann eine maschinelle Kreativität des Maschinenlernmodells genutzt werden, zugleich aber die Qualität des refaktorierten Code gesichert werden. In anderen Worten: Fehler, insbesondere fehlerhaft refaktorierter Code, die gelegentlich durchaus durch das Maschinenlernmodell entstehen können, werden verlässlich oder zumindest mit hinreichend großer Wahrscheinlichkeit durch die V & V Methoden erkannt, bevor der refaktorierte Code zum Steuern, Regeln und/oder Überwachen des technischen Systems eingesetzt wird. Dadurch können Funktionalität und Sicherheit der Software und zum Beispiel des durch die Software gesteuerten, geregelten und/oder überwachten technischen Systems wie z.B. eines Fahrzeugs oder eines Roboters verbessert werden. Durch den hohen Grad der Automatisierung ist es außerdem möglich, beliebig oft im Lebenszyklus der Software, d.h. immer wann nötig, und ohne großen Aufwand zu refaktorieren. Auch dadurch kann die Software, mithin das technische System verbessert werden. Beim Refaktorieren können zum Beispiel durch den Prompt und/oder durch weitere Inputs des Maschinenlernmodells weitere Zielanforderungen an das Refaktorieren des Code vorgegeben werden. Zum Beispiel kann zusätzlich zur funktionalen Äquivalenz des Code und des refaktorierten Code, gezielt die Qualität, insbesondere die Wartbarkeit des Code gesteigert werden. Alternativ oder zusätzlich kann auch vorgegeben werden, dass der refaktorierte Code eine oder mehrere Spezifikationen erfüllt. Neben der Spezifikation der Software selbst kann zum Beispiel auch verlangt werden, dass eine übergeordnete Spezifikation wie z.B. die ISO 26262 erfüllt wird. In diesem Fall müssen dann zum Beispiel Rekursionen im Code durch andere Schleifen ersetzt werden, da Rekursionen gemäß der ISO 26262 nicht zugelassen sind. Alternativ oder zusätzlich können die weiteren Zielanforderungen auch eine oder mehrere Anforderungen umfassen, die sich zwar nicht hinsichtlich der funktionalen Äquivalenz auswirken, aber dennoch funktional von Bedeutung sind. So kann zum Beispiel zusätzlich zur funktionalen Äquivalenz verlangt werden, dass der Speicherverbrauch reduziert wird und/oder strengere Laufzeitanforderungen eingehalten werden. Weiterhin kann auch eine Zielanforderung vorsehen, dass der Code nicht nur refaktoriert, sondern auch in eine andere Programmiersprache (z.B. von C nach Rust) übersetzt werden soll.

Durch die bessere Wartbarkeit, Verständlichkeit und/oder Änderbarkeit des Code ist in der Folge eine effizientere und weniger fehlerträchtige Weiterentwicklung der Software möglich. Dies reduziert auch den Zeitaufwand und die Kosten der Softwareentwicklung, zumindest ohne dass die Qualität der Software beeinträchtigt wird. Die automatisierte Qualitätsverbesserung ist insbesondere auch insoweit vorteilhaft, als Software-Ingenieuren leider oft die Zeit fehlt, sich auch noch um die Wartbarkeit des Code zu kümmern. Schlechte Wartbarkeit sollte - wie hier dank des vorgeschlagenen Verfahrens - dennoch vermieden werden, da sie langfristig zu stark erhöhten Wartungskosten und erhöhter Fehleranfälligkeit bei nachträglichen Änderungen führt.

Ein weiterer Vorteil besteht darin, dass die resultierenden Refaktorierungsvorschläge und/oder eine erzeugte Vielzahl von refaktoriertem Code dazu genutzt werden können, einen domänen-spezifischen Refaktorierungsassistenten zu trainieren. Dies kann zum Beispiel wie im Verfahren 200 nach dem zweiten allgemeinen Aspekt (oder einer Ausführungsform davon) erfolgen. Dadurch kann überwachtes Finetuning und/oder unüberwachtes (Reinforcement) Learning basierend auf den Bewertungsergebnissen durchgeführt werden, mithin das Verfahren nach dem ersten allgemeinen Aspekt (oder einer Ausführungsform davon) verbessert werden. Dadurch kann dann (zukünftiger) Code noch besser refaktoriert werden.

### Kurzbeschreibung der Figuren

**Fig. 1a** illustriert schematisch beispielhafte Ausführungsformen eines computerimplementierten Verfahrens für die automatisierte Refaktorierung von Code einer Software.
**Fig. 1b** illustriert schematisch beispielhafte Ausführungsformen eines computerimplementierten Verfahrens für die automatisierte Refaktorierung von Code einer Software, wobei mindestens ein Refaktorierungsvorschlag umgesetzt wird.
**Fig. 2a** illustriert schematisch beispielhafte Maschinenlernmodelle, die zumindest Code und Prompt auf den refaktorierten Code abbilden.
**Fig. 2b** illustriert schematisch eine beispielhafte Verkettung zweier Maschinenlernmodellen, wobei zumindest Code und Prompt zunächst auf mindestens einen Refaktorierungsvorschlag und dann auf den refaktorierten Code abgebildet werden.
**Fig. 3** illustriert schematisch das Bewerten des refaktorierten Code.

### Detaillierte Beschreibung

Das in dieser Offenbarung vorgeschlagene Verfahren 100 ist auf die automatisierte Refaktorierung von Code einer Software gerichtet. Die Software kann dafür ausgelegt sein, ein technisches System, insbesondere ein cyber-physisches System, insbesondere mindestens eine Recheneinheit eines Fahrzeugs, zu steuern, zu regeln und/oder zu überwachen. Insbesondere kann die Software eine embedded Software sein, die dafür ausgelegt ist, auf einem eingebetteten (d.h. z.B. aufgabenspezifischen) System ausgeführt werden.

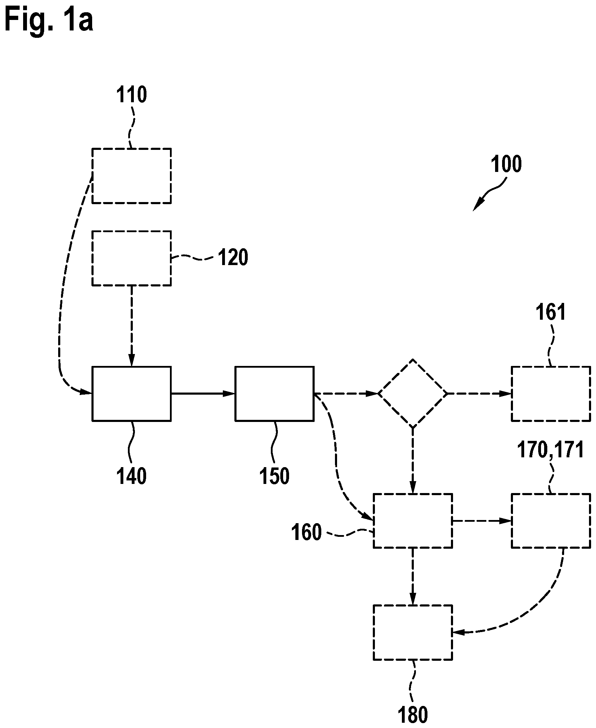

Offenbart wird dazu zunächst ein computer-implementiertes Verfahren 100, schematisch illustriert in **Fig. 1a****-b** für die automatisierte Refaktorierung von Code der Software. Das Verfahren 100 umfasst Refaktorieren 140, via ein Maschinenlernmodell 30, des Code 10 der Software zumindest basierend auf dem Code 10 und einem Prompt 20, wobei der Code 10 refaktoriert wird. Das Verfahren umfasst weiterhin Bewerten 150 des refaktorierten Code 40, wobei ein Bewertungsergebnis resultiert.

Der Code 10 der Software kann ein Quellcode der Software sein. Der Code 10 kann in einer oder mehreren Programmiersprachen geschrieben sein. Zum Beispiel kann der Code 10 in der Programmiersprache C geschrieben sein. Alternativ oder zusätzlich kann der Code 10 zum Beispiel in der Programmiersprache Rust geschrieben sein. Dank des hinreichend großen Sprachverständnisses des Maschinenlernmodells muss keine Festlegung bezüglich der Programmiersprache(n) erfolgen. In anderen Worten, das Verfahren 100 kann auf jeden Code unabhängig von der oder den Programmiersprachen angewandt werden.

Das Refaktorieren 140 des Code 10 kann Ändern des Code 10 umfassen oder sein. Der refaktorierte Code 40 kann ebenfalls wieder ein Code der Software, insbesondere ein Quellcode der Software sein.

Das Maschinenlernmodell 30 kann ein Foundation Model (auf Deutsch etwa: Basismodell) umfassen oder sein. Ein Foundation Model kann ein großes Maschinenlernmodell sein, das auf einer großen Datenmenge in großem Umfang trainiert wurde (oft durch selbstüberwachtes Lernen oder halbüberwachtes Lernen), so dass es an eine breite Palette nachgelagerter Aufgaben angepasst werden kann. Insbesondere kann das Maschinenlernmodell ein Large Language Model (LLM) umfassen oder sein. Ein Large Language Model kann ein Sprachmodell sein, das sich durch seine Größe auszeichnet. Insbesondere kann das Large Language Model ein Chatbot sein und/oder über Chatbot-Funktionalität verfügen. Als Large Language Model kann zum Beispiel Meta AI LLaMA verwendet werden. Ein solches Large Language Model kann vorteilhaft sein, da es und insbesondere dessen Gewichte und/oder Verzerrungen zum Beispiel durch das Verfahren 200 angepasst werden können. Alternativ oder zusätzlich kann zum Beispiel Google BERT verwendet werden. Alternativ oder zusätzlich kann als Large Language Model zum Beispiel OpenAI ChatGPT (z.B. in der Version vom 24.05.2023) verwendet werden. Alternativ oder zusätzlich kann als Large Language Model zum Beispiel Hugging Face Bloom verwendet werden.

Alternativ oder zusätzlich kann das Maschinenlernmodell ein Multi-Domain Model umfassen oder sein. Hier kann zum Beispiel OpenAI GPT-4 (z.B. in der Version vom 14.03.2023) verwendet werden.

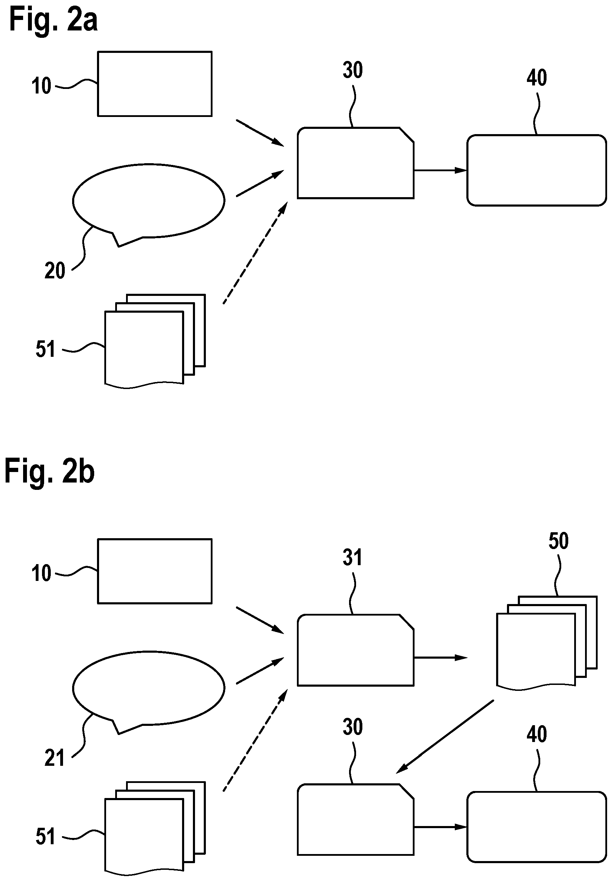

Beispielhafte Ausführungsformen des Maschinenlernmodells 30 sind in **Fig. 2a****-b** schematisch illustriert.

Der Prompt 20 kann ein natürlichsprachlicher Text sein. Der Prompt 20 kann eine natürlichsprachliche Anweisung an das Maschinenlernmodell 30 umfassen oder sein. Der Prompt 20 kann zum Beispiel, wie z.B. für das Maschinenlernmodell 30 aus **Fig. 2a****,** eine sprachliche Anweisung an das Large Language Model (LLM) umfassen, die darauf gerichtet ist, den Code 10 der Software zu refaktorieren. Alternativ oder zusätzlich kann der Prompt 20, wie z.B. für das Maschinenlernmodell 30 aus **Fig. 2b****,** eine sprachliche Anweisung an das Large Language Model (LLM) umfassen, die darauf gerichtet ist, mindestens einen Refaktorierungsvorschlag 50 umzusetzen, so dass der Code 10 der Software refaktoriert wird. Alternativ oder zusätzlich kann der Prompt 20 eine sprachliche Anweisung an das Large Language Model (LLM) umfassen, die darauf gerichtet ist, einen vorbestimmten Refaktorierungsvorschlag zu erweitern, verbessern und/oder zu korrigieren.

Das Bewertungsergebnis kann einen natürlichsprachlichen Text umfassen oder ein solcher natürlichsprachlicher Text sein. Alternativ oder zusätzlich kann das Bewertungsergebnis eine Datenstruktur, die in einer vorbestimmten Syntax (z.B. in einer Programmiersprache) geschrieben ist, umfassen oder eine solche Datenstruktur sein. Die Datenstruktur kann zum Beispiel den natürlichsprachlichen Text umfassen. Das Bewertungsergebnis kann einen oder mehrere numerische Werte, insbesondere einen oder mehrere Konfidenzwerte umfassen. Dadurch kann eine Güte des refaktorierten Code 40, mithin gegebenenfalls des mindestens einen Refaktorierungsvorschlags 50 kodiert werden, die bei der Validierung und Verifikation des refaktorierten Code, mithin der Software berücksichtigt werden kann. Das Bewerten 150 des refaktorierten Code 40 kann als eine Validierung und/oder als eine Verifikation gesehen (V & V) werden.

Sollte es mal nicht gelingen, einen refaktorierten Code zu erzeugen, kann das Bewertungsergebnis eine Information umfassen, dass die Erzeugung des refaktorierten Code fehlgeschlagen ist. Dies kann zum Beispiel dann passieren, wenn der Code bereits widersprüchlich und/oder korrupt ist. Auch diese Information ist wertvoll für die Entwicklung des technischen Systems. In diesem Fall kann und muss dann der Code angepasst und insbesondere verbessert werden. Andererseits kann ein Refaktorieren nicht mehr erforderlich sein, wenn der Code bereits (zufriedenstellend) refaktoriert ist. In diesem Fall besteht dann kein Handlungsbedarf.

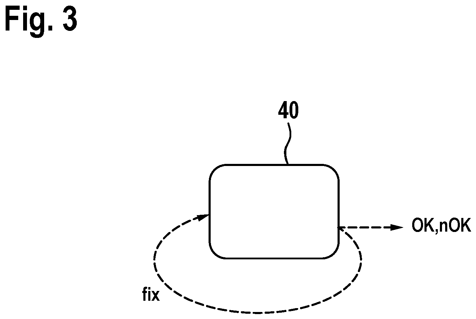

Wie z.B. in **Fig. 3** schematisch dargestellt, kann der erzeugte refaktorierte Code bewertet werden, wobei zum Beispiel jeweils die Ergebnisse OK oder nOK (kurz für: nicht OK) vom Bewertungsergebnis umfasst sind. Im Falle eines nOK-Ergebnisses, kann der refaktorierte Code repariert ("gefixt" oder "fix") werden, wobei ein in einer früheren Iteration des Verfahrens 100 erzeugter refaktorierter Code zum Beispiel in einer weiteren Iteration des Verfahrens 100 angepasst, verbessert und/oder korrigiert werden kann.

Das Verfahren 100 kann Ausführen 180 des (ggf. kompilierten) refaktorierten Code 10, mithin der Software umfassen. Dadurch kann das technische System durch Ausführen des (kompilierten) refaktorierten Code gesteuert, geregelt und/oder überwacht werden.

Das Verfahren 100 kann in einer elektronischen Programmierumgebung ausgeführt werden. Die elektronische Programmierumgebung kann, muss aber nicht die Ausführungsumgebung sein. Die elektronische Programmierumgebung kann der Ausführungsumgebung übergeordnet sein. Zum Beispiel kann die Ausführungsumgebung durch die elektronische Programmierumgebung initialisiert und sodann gesteuert werden. Weiterhin können zum Beispiel ein oder mehrere Ausführungsergebnisse von der Ausführungsumgebung an die elektronische Programmierumgebung zurückgegeben werden. Die elektronische Programmierumgebung ermöglicht die Programmierung und/oder Interaktion mit einer Vielzahl von Iterationen des Verfahrens 100. Insbesondere beim Initialisieren der Iterationen und/oder beim Debuggen während der Iterationen erweist sich die elektronische Programmierumgebung als vorteilhaft. Zum Beispiel können der Prompt 20 und/oder der weitere Prompt 21 in der elektronischen Programmierumgebung angepasst werden.

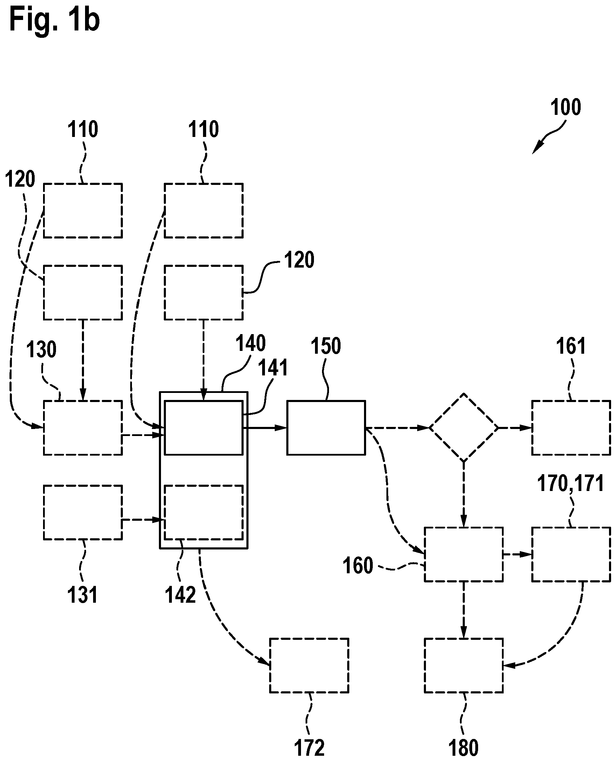

Wie z.B. in **Fig. 1b** schematisch illustriert, kann das Refaktorieren 140 des Code 10 der Software Umsetzen 141, via das Maschinenlernmodell 30, mindestens eines Refaktorierungsvorschlags 50 umfassen. Durch das Umsetzen 141 des mindestens einen Refaktorierungsvorschlags 50 kann der Code 10 refaktoriert, d.h. insbesondere geändert werden. Andererseits kann wie z.B. in **Fig. 1a** schematisch illustriert, das Umsetzen 141 des mindestens einen Refaktorierungsvorschlags 50 entbehrlich sein, wenn zum Beispiel der refaktorierte Code, wie in **Fig. 2a** schematisch illustriert, bereits ein Output des Maschinenlernmodells 30 ist.

Wie z.B. in **Fig. 1b** und **Fig. 2b** schematisch illustriert, kann das Verfahren 100 Erzeugen 130, via ein weiteres Maschinenlernmodell 31, des mindestens einen Refaktorierungsvorschlags 50 zur Refaktorierung des Code 10 zumindest basierend auf dem Code 10 und einem weiteren Prompt 21 umfassen.

Der Schritt des Erzeugens 130 des mindestens einen Refaktorierungsvorschlags 50 kann vor dem Umsetzen 141 des mindestens einen Refaktorierungsvorschlags 50 erfolgen. Alternativ oder zusätzlich kann mindestens ein vorbestimmter Refaktorierungsvorschlag als weiterer Input des weiteren Maschinenenlernmodells 31 oder via den weiteren Prompt 21 vorgegeben werden.

Ein oder mehrere vorbestimmte Refaktorierungsvorschläge können zudem fest vorgegeben sein oder zum Beispiel über eine Benutzereingabe der elektronischen Programmierumgebung vom Nutzer empfangen werden. In anderen Worten, ein oder mehrere vorbestimmte Refaktorierungsvorschläge müssen nicht über das weitere Maschinenlernmodell 31 erzeugt werden 130, sondern können vorab auch durch andere Techniken (z.B. via Bad Smell Detection) ermittelt werden.

Das weitere Maschinenlernmodell 31 kann ein Foundation Model umfassen oder sein. Insbesondere kann das weitere Maschinenlernmodell ein Large Language Model (LLM) umfassen oder sein. Alternativ oder zusätzlich kann das weitere Maschinenlernmodell ein Multi-Domain Model umfassen oder sein. Das weitere Maschinenlernmodell 31 (zum Erzeugen 130 des mindestens einen Refaktorierungsvorschlags 50 zur Refaktorierung des Code 10) kann, muss aber nicht das Maschinenlernmodell 30 (zum Refaktorieren 140 des Code und ggf. zum Umsetzen 141 des mindestens einen Refaktorierungsvorschlags 50) sein. Der weitere Prompt 21 kann, muss aber nicht den Prompt 20 umfassen.

Der weitere Prompt 21 kann ein natürlichsprachlicher Text sein. Der weitere Prompt 21 kann eine natürlichsprachliche Anweisung an das Maschinenlernmodell 31 umfassen oder sein. Der weitere Prompt kann eine sprachliche Anweisung an das Large Language Model (LLM) umfassen, die darauf gerichtet ist, mindestens einen Refaktorierungsvorschlag 50 zumindest basierend auf dem Code 10 zu erzeugen.

Das Verfahren 100 kann Empfangen 110 des Code 10 umfassen. Alternativ oder zusätzlich kann das Verfahren 100 Empfangen 120 des Prompt 20 und/oder des weiteren Prompts 21 umfassen. Alternativ oder zusätzlich kann das Verfahren 100 Empfangen des mindestens einen Refaktorierungsvorschlags 50 umfassen. Alternativ oder zusätzlich kann das Verfahren 100 Empfangen des Maschinenlernmodells 30 und/oder des weiteren Maschinenlernmodells 31 umfassen.

Der mindestens eine Refaktorierungsvorschlag 50 kann eine oder mehrere Anweisungen umfassen, wie der Code 10 der Software geändert werden kann, so dass die Funktionalität der Software gleichbleibt, aber mindestens eine Zielanforderung an den Code 10 erfüllt wird. Die mindestens eine Zielanforderung kann zumindest eine Steigerung der Qualität des Code 10 verlangen.

Die Steigerung der Qualität des Code 10 kann auf das Ziel gerichtet sein, den jeweiligen Aufwand für eine Fehleranalyse und/oder eine funktionale Erweiterung zu senken. Eine Steigerung der Qualität des Code 10 kann zum Beispiel eine Steigerung der Lesbarkeit des Code 10 umfassen. Alternativ oder zusätzlich kann die Steigerung der Qualität des Code 10 zum Beispiel eine Steigerung der Verständlichkeit des Code 10 umfassen. Alternativ oder zusätzlich kann die Steigerung der Qualität des Code 10 zum Beispiel eine Steigerung der Wartbarkeit des Code 10 umfassen. Alternativ oder zusätzlich kann die Steigerung der Qualität des Code 10 zum Beispiel eine Steigerung der Erweiterbarkeit des Code 10 (oder der Software) umfassen. Der Prompt 20 und/oder der weitere Prompt 21 können solche Vorgaben umfassen. Alternativ können sie jeweils als weitere Inputs zu dem Maschinenlernmodell 30 und/oder dem weiteren Maschinenlernmodell 31 berücksichtigt werden.

Eine Anweisung kann natürlichsprachlich sein. Alternativ oder zusätzlich kann eine Anweisung eine Datenstruktur umfassen, die die vorgeschlagenen Änderungen des Code 10 umfasst, insbesondere codiert.

Die mindestens eine Zielanforderung oder eine weitere Zielanforderung im Hinblick auf die Änderung des Code 10 kann zum Beispiel eine Anforderung zum Speicherbedarf bei Ausführung der Software umfassen. Eine solche Anforderung kann zum Beispiel auf einer (absoluten) Speicherkapazität basieren. Hier kann zum Beispiel vorgegeben werden, dass der Speicherbedarf bei Ausführung der Software eine maximale Speicherkapazität nicht überschreiten soll. Alternativ oder zusätzlich kann die Anforderung zum Beispiel auf einem (relativen) Speicherbedarfsänderungswunsch basieren. Hier kann zum Beispiel vorgegeben werden, dass der Speicherbedarf auf einen Bruchteil (z.B. 90 %) des derzeitigen Speicherbedarfs geändert werden soll.

Alternativ oder zusätzlich kann die mindestens eine Zielanforderung oder eine weitere Zielanforderung im Hinblick auf die Änderung des Code 10 zum Beispiel eine Anforderung zur Laufzeit bei Ausführung der Software umfassen. Eine solche Anforderung kann zum Beispiel auf einer (absoluten) Laufzeit basieren. Hier kann zum Beispiel vorgegeben werden, dass die Laufzeit bei Ausführung der Software eine maximale Laufzeit nicht überschreiten soll. Alternativ oder zusätzlich kann die Anforderung zum Beispiel auf einem (relativen) Laufzeitänderungswunsch basieren. Hier kann zum Beispiel vorgegeben werden, dass die Laufzeit auf einen Bruchteil (z.B. 80 %) der derzeitigen Laufzeit geändert werden soll. Alternativ oder zusätzlich kann die mindestens eine Zielanforderung oder eine weitere Zielanforderung im Hinblick auf die Änderung des Code 10 zum Beispiel eine Anforderung, dass der refaktorierte Code in einer anderen Programmiersprache geschrieben sein soll, umfassen.

Im Folgenden werden spezielle Faktoren offenbart, von denen das Refaktorieren und/oder das Erzeugen des mindestens einen Refaktorierungsvorschlag abhängig sein können.

Das Refaktorieren 140, via das Maschinenlernmodell 30, des Code der Software kann zumindest auf einer natürlichsprachlichen und/oder formalen Spezifikation der Software basieren. Die natürlichsprachliche und/oder formale Spezifikation der Software kann zum Beispiel als weiterer Input des Maschinenlernmodells 30 beim Refaktorieren 140 berücksichtigt werden. Alternativ kann die natürlichsprachliche und/oder formale Spezifikation der Software via den Prompt 20 in das Refaktorieren 140 eingehen.

Alternativ oder zusätzlich kann das Erzeugen 130, via das weitere Maschinenlernmodell 31, des mindestens einen Refaktorierungsvorschlags 50 zumindest auf einer natürlichsprachlichen und/oder formalen Spezifikation der Software basieren. Die natürlichsprachliche und/oder formale Spezifikation der Software kann zum Beispiel als weiterer Input des weiteren Maschinenlernmodells 31 beim Erzeugen 130 des mindestens einen Refaktorierungsvorschlags 50 berücksichtigt werden. Alternativ kann die natürlichsprachliche und/oder formale Spezifikation der Software via den weiteren Prompt 21 in das Erzeugen 130 des mindestens einen Refaktorierungsvorschlags 50 eingehen.

Die natürlichsprachliche und/oder formale Spezifikation der Software kann zum Beispiel einen oder mehrere Gültigkeitsbereiche für Parameter des Code 10 (oder der Software) umfassen. Alternativ oder zusätzlich kann die natürlichsprachliche und/oder formale Spezifikation der Software zum Beispiel eine Beschreibung der (gewünschten) Funktionsweise der Software umfassen. Alternativ oder zusätzlich kann die natürlichsprachliche und/oder formale Spezifikation der Software zum Beispiel den zu erreichenden Zweck der Software umfassen. Alternativ oder zusätzlich kann das Refaktorieren 140, via das Maschinenlernmodell 30, des Code der Software zumindest auf mindestens einem vorbestimmten Refaktorierungsvorschlag 51 basieren. Der mindestens eine vorbestimmte Refaktorierungsvorschlag 51, kann zum Beispiel, wie z.B. in **Fig. 2a** schematisch illustriert, als weiterer Input des Maschinenlernmodells 30 beim Refaktorieren 140 berücksichtigt werden. Alternativ kann der mindestens eine vorbestimmte Refaktorierungsvorschlag 51 via den Prompt 20 in das Refaktorieren 140 eingehen.

Alternativ oder zusätzlich kann das Erzeugen 130, via das weitere Maschinenlernmodell 31, des mindestens einen Refaktorierungsvorschlags 50 zumindest auf einem vorbestimmten Refaktorierungsvorschlag 51 basieren. Der vorbestimmte Refaktorierungsvorschlag 51 kann zum Beispiel, wie z.B. in **Fig. 2b** schematisch illustriert, als weiterer Input des weiteren Maschinenlernmodells 31 beim Erzeugen 130 des mindestens einen Refaktorierungsvorschlags 50 berücksichtigt werden. Alternativ kann der vorbestimmte Refaktorierungsvorschlag 51 via den weiteren Prompt 21 in das Erzeugen 130 des mindestens einen Refaktorierungsvorschlags 50 eingehen.

Der vorbestimmte Refaktorierungsvorschlag 51 kann einen allgemeinen Vorschlag umfassen, wie der Code 10 refaktoriert werden soll. Zum Beispiel kann der allgemeine Vorschlag vorgeben, dass Rekursionen im Code 10 durch andere Schleifen ersetzt werden sollen (siehe ISO 26262). Alternativ oder zusätzlich kann der allgemeine Vorschlag zum Beispiel vorgeben, dass keine dynamische Speicherallokation im Code 10 erfolgen darf. Alternativ oder zusätzlich kann der vorbestimmte Refaktorierungsvorschlag 51 einen Vorschlag umfassen, wie ein beispielhafter Teil des Code 10 verändert werden soll. In einem anderen Beispiel kann der vorbestimmte Refaktorierungsvorschlag 51 in einer früheren Iteration des Verfahrens 100 erzeugt worden sein, der nun in der aktuellen Iteration des Verfahrens 100 erweitert, verbessert und/oder korrigiert werden soll. Hierzu kann gegebenenfalls auch der Prompt 20 für die aktuelle Iteration angepasst werden.

Das Refaktorieren 140 des Code der Software oder das Umsetzen 141, via das Maschinenlernmodell 30, mindestens eines Refaktorierungsvorschlags 50 kann Umsetzen 142, via das Maschinenlernmodell 30, einer Vielzahl von Refaktorierungsvorschläge umfassen. Das Verfahren 100 kann Umsetzen, via das Maschinenlernmodell 30, einer Vielzahl von Refaktorierungsvorschlägen (d.h. mindestens zweier Refaktorierungsvorschläge) zumindest basierend auf dem Prompt 20 und/oder dem weiteren Prompt 21 umfassen. Ein oder mehrere Refaktorierungsvorschläge der Vielzahl der Refaktorierungsvorschläge können zum Beispiel zumindest basierend auf dem Prompt 20 und/oder auf dem weiteren Prompt 21 umgesetzt werden, d.h. in einer (einzigen) Ausführung des Verfahrens 100. Alternativ oder zusätzlich können ein oder mehrere Refaktorierungsvorschläge der Vielzahl der Refaktorierungsvorschläge durch Mehrfachausführungen des Verfahrens 100 umgesetzt werden. Vorteilhafterweise kann in Mehrfachausführungen des Verfahrens 100 der Prompt 20 und/oder der weitere Prompt 21 variiert werden. Andererseits muss der Prompt 20 und/oder der weitere Prompt 21 in Mehrfachausführungen des Verfahrens 100 nicht variiert werden.

Das Umsetzen 141, 142 des mindestens einen Refaktorierungsvorschlags 50 kann automatisiert, d.h. ohne Eingabe eines Nutzers einer elektronischen Programmierumgebung erfolgen. Alternativ kann das Umsetzen 141, 142 des mindestens einen Refaktorierungsvorschlags 50 zumindest teilweise von einer Eingabe des Nutzers der elektronischen Programmierumgebung abhängen.

Das Erzeugen 130, via das weitere Maschinenlernmodell 31, des mindestens einen Refaktorierungsvorschlags 50 und/oder, wie z.B. in **Fig. 1b** schematisch illustriert, das Verfahren 100 können Erzeugen 131, via das weitere Maschinenlernmodell 31, einer Vielzahl von Refaktorierungsvorschlägen zur Refaktorierung des Code 10 basierend auf dem Code 10 und dem weiteren Prompt 21 umfassen.

Das Verfahren 100 kann Erzeugen einer Vielzahl von Refaktorierungsvorschlägen (d.h. mindestens zweier Refaktorierungsvorschläge) umfassen. Ein oder mehrere Refaktorierungsvorschläge der Vielzahl der Refaktorierungsvorschläge können zum Beispiel zumindest basierend auf dem Code 10 und dem weiteren Prompt 21 erzeugt werden, d.h. in einer (einzigen) Ausführung des Verfahrens 100. Alternativ oder zusätzlich können ein oder mehrere Refaktorierungsvorschläge der Vielzahl der Refaktorierungsvorschläge durch Mehrfachausführungen des Verfahrens 100 erzeugt werden. Vorteilhafterweise kann in Mehrfachausführungen des Verfahrens 100 der weitere Prompt 21 variiert werden. Andererseits muss der weitere Prompt 21 in Mehrfachausführungen des Verfahrens 100 nicht variiert werden. Alternativ oder zusätzlich können ein oder mehrere Refaktorierungsvorschläge der Vielzahl der Refaktorierungsvorschläge vorbestimmt sein. Im Hinblick auf den hohen Komplexitätsgrad des Code können zahlreiche Refaktorierungsvorschläge nötig sein, um den Code zu refaktorieren 150.

Das Verfahren 100 kann, wie z.B. durch das "OK" in **Fig. 3** schematisch illustriert, Beibehalten 160 des refaktorierten Code 40 nach einem vorbestimmten Kriterium basierend auf dem Bewertungsergebnis umfassen. Das Verfahren 100 kann wie z.B. in **Fig. 1a****-b** schematisch illustriert (muss aber nicht) Verwerfen 161 des refaktorierten Code 40 anderenfalls (d.h. wenn kein Beibehalten 160 erfolgt) umfassen. Anstelle des Verwerfens kann der refaktorierte Code zum Beispiel repariert werden, siehe z.B. **Fig. 3****.** Wird der refaktorierte Code 40 nicht beibehalten 160, kann er und/oder eine aus ihm abgeleitete Erkenntnis in einer erneuten Iteration des Verfahrens 100 berücksichtigt werden.

Das Bewerten 150 des refaktorierten Code 40 kann Prüfen, ob der Code 10 und der refaktorierte Code 40 im Hinblick auf deren Ausführung in mindestens einem vorbestimmten Testfall übereinstimmen, umfassen. Insbesondere kann das Bewerten 150 des refaktorierten Code 40 Prüfen umfassen, ob der Code 10 und der refaktorierte Code 40 im Hinblick auf deren Ausführung in einer Vielzahl der vorbestimmten Testfälle übereinstimmen. Dazu kann zum Beispiel eine Ausführungsumgebung (auch: Test-Harness) insbesondere durch das Verfahren 100 automatisiert aufgebaut werden, um den Code 10 und den refaktorierten Code 40 im Hinblick auf den mindestens einen vorbestimmten Testfall oder auf die Vielzahl der vorbestimmten Testfälle auszuführen. Der mindestens eine vorbestimmte Testfall oder die Vielzahl der vorbestimmten Testfälle können automatisiert generiert worden sein. Alternativ oder zusätzlich können der mindestens eine vorbestimmte Testfall oder die Vielzahl der vorbestimmten Testfälle auf Fuzzing basieren. Alternativ oder zusätzlich können der mindestens eine vorbestimmte Testfall oder die Vielzahl der vorbestimmten Testfälle auf einer Ableitung aus mindestens einem Contract basieren. Der Contract kann zum Beispiel einen oder mehrere Kommentare im Code umfassen, die Eigenschaften beschreiben, die der Code erfüllen sollte.

Alternativ oder zusätzlich können der mindestens eine vorbestimmte Testfall oder die Vielzahl der vorbestimmten Testfälle durch ein drittes Maschinenlernmodell generiert worden sein. Das dritte Maschinenlernmodell kann das Maschinenlernmodell 30 (zum Refaktorieren 140 des Code und ggf. zum Umsetzen 141 des mindestens einen Refaktorierungsvorschlags) sein. Alternativ oder zusätzlich kann das dritte Maschinenlernmodell das weitere Maschinenlernmodell 31 (zum Erzeugen 130 des mindestens einen Refaktorierungsvorschlags zur Refaktorierung des Code 10) sein. Andererseits muss das dritte Maschinenlernmodell nicht notwendigerweise das Maschinenlernmodell 30 (zum Refaktorieren 140 des Code und ggf. zum Umsetzen 141 des mindestens einen Refaktorierungsvorschlags) oder das weitere Maschinenlernmodell 31 (zum Erzeugen 130 des mindestens einen Refaktorierungsvorschlags zur Refaktorierung des Code 10) sein. Der mindestens eine vorbestimmte Testfall oder zumindest ein Teil der Vielzahl der vorbestimmten Testfälle können sich in einer früheren Iteration des Verfahrens 100 als differenzierend erwiesen haben. Ein Testfall kann in der früheren Iteration des Verfahrens 100 differenzierend sein, wenn der in der früheren Iteration des Verfahrens 100 maßgebliche Code und der in der früheren Iteration des Verfahrens 100 maßgebliche refaktorierte Code im Hinblick auf deren Ausführung in dem Testfall nicht übereinstimmten. Differenzierende Tests und Bestehen solcher sind besonders aussagekräftig.

Stimmen der Code 10 und der refaktorierte Code 40 im Hinblick auf deren Ausführung in mindestens einem Testfall nicht überein, fehlt es an der funktionalen Äquivalenz. Der refaktorierte Code 40 kann (und muss) dann verworfen werden. Das Verfahren 100 kann Labeln des mindestens einen vorbestimmten Testfalls als differenzierend umfassen, wenn das Prüfen ergibt, dass der Code 10 und der refaktorierte Code 40 im Hinblick auf deren Ausführung in mindestens einem vorbestimmten Testfall nicht übereinstimmen. Wie bereits diskutiert, kann zum Beispiel der als differenzierend gelabelte mindestens eine vorbestimmte Testfall zusammen mit einem gegebenenfalls angepassten Prompt 20 und/oder angepassten weiteren Prompt 21 dafür genutzt werden, in einer weiteren Iteration des Verfahrens 100 einen oder mehrere weitere Refaktorisierungsvorschläge zu erzeugen.

Alternativ oder zusätzlich kann das Bewerten 150 des refaktorierten Code 40 Prüfen umfassen, ob der refaktorierte Code 40 mindestens einen vorbestimmten Contract erfüllt. Dies kann in einer statischen Prüfung erfolgen. Dies kann zum Beispiel via Bounded Model Checking erfolgen. Alternativ oder zusätzlich kann dies zum Beispiel via Abstract Interpretation erfolgen. Das Bewerten 150 des refaktorierten Code 40 kann Prüfen, ob der refaktorierte Code 40 eine Vielzahl vorbestimmter Contracts erfüllt, umfassen.

Alternativ oder zusätzlich kann das Bewerten 150 des refaktorierten Code 40 Prüfen umfassen, ob der Code 10 und der refaktorierte Code 40 funktional gleich sind. Auch dies kann zum Beispiel via Bounded Model Checking erfolgen. Alternativ oder zusätzlich kann das Bewerten 150 des refaktorierten Code 40 Prüfen umfassen, ob der refaktorierte Code 40 die mindestens eine Zielanforderung erfüllt. Das Prüfen, ob der refaktorierte Code 40 die mindestens eine Zielanforderung erfüllt, kann Anwenden von Code- und/oder Testmetriken auf den refaktorierten Code 40 umfassen. Dabei kann insbesondere ein Wartbarkeitsindex berechnet werden. Zum Beispiel kann eine Testabdeckung gemessen werden. Alternativ oder zusätzlich können weitere Eigenschaften des (refaktorierten) Code in einer statischen oder dynamischen Analyse geprüft werden. Alternativ oder zusätzlich kann die Qualität des Code auf einer Gewichtung mehrerer Code- und/oder Testmetriken basieren.

Für mindestens einen oder je Refaktorierungsvorschlag der Vielzahl der Refaktorierungsvorschläge kann ein refaktorierter Code erzeugt und bewertet werden 150. Dieser kann jeweils in Abhängigkeit des jeweiligen Bewertungsergebnisses beibehalten oder verworfen werden, wobei im Falle des Verwerfens der zuletzt beibehaltene refaktorierte Code beibehalten wird. Hier können zum Beispiel in jedem Schritt ein oder mehrere Refaktorierungsvorschläge nach dem Verfahren 100 erzeugt werden, auf deren Basis sukzessive der Code refaktoriert wird. Dadurch kann effizient ein Code erzeugt werden, in dem alle Refaktorierungsvorschläge umgesetzt worden sind.

Das Verfahren 100 kann Ausgeben 170 des Bewertungsergebnisses umfassen. Dies kann zum Beispiel via die elektronische Programmierumgebung erfolgen. Dies ist vorteilhaft, da anhand des Bewertungsergebnisses der Ablauf des Verfahrens 100 angepasst werden kann. So können zum Beispiel Refaktorierungsvorschläge und/oder refaktorierter Code aufgrund der Bewertungsergebnisse manuell ausgewählt oder aussortiert werden.

Alternativ oder zusätzlich kann das Verfahren 100 Ausgeben 171 des refaktorierten Code 40 umfassen. Dies kann auch via die elektronische Programmierumgebung erfolgen.

Alternativ oder zusätzlich kann das Verfahren 100 Ausgeben 172 des mindestens einen Refaktorierungsvorschlag 50 umfassen. Auch dies kann zum Beispiel via die elektronische Programmierumgebung erfolgen.

Das Verfahren 100 kann auf mindestens einer Eingabe eines Benutzers einer Schnittstelle der elektronischen Programmierumgebung basieren. Zum Beispiel kann das Verfahren 100 und/oder dessen Mehrfachausführungen über die elektronische Programmierumgebung (interaktiv) gesteuert werden. Dies kann zum Beispiel hilfreich sein, beim Einrichten der Programmierumgebung und/oder der Ausführungsumgebung, bevor das Verfahren 100 automatisiert durchlaufen lassen wird. Alternativ oder zusätzlich kann die interaktive Steuerung beim Debuggen des automatisierten Durchlaufs des Verfahrens 100 hilfreich sein. Alternativ oder zusätzlich kann zum Beispiel via eine Eingabe nach dem Erzeugen der Vielzahl der Refaktorierungsvorschläge eine interaktive Auswahl der gewünschten Refaktorierungsvorschläge erfolgen, bevor mit dem Refaktorieren des Code fortgefahren wird.

Das Verfahren 100 kann wiederholt werden. Dabei können das Maschinenlernmodell und/oder der Prompt sowie gegebenenfalls weitere Inputs variiert werden. Alternativ oder zusätzlich können gegebenenfalls auch das weitere Maschinenlernmodell und/oder der weitere Prompt sowie gegebenenfalls weitere Inputs variiert werden.

Unterschiedliche Refaktorierungsvorschläge können sowohl durch Einfach- als auch durch Mehrfachausführungen des Verfahrens 100 erzeugt werden. Bereits in einer Einfachausführung des Verfahrens 100 besteht eine Varianz durch die inhärente Variabilität des Maschinenlernmodells (temperature). Soll es auf Basis eines (weiteren) Prompts zum Beispiel 101 unterschiedliche Refaktorierungsvorschläge generieren, können dank der inhärenten Variabilität tatsächlich 101 unterschiedliche Refaktorierungsvorschläge generiert werden. Weiterhin besteht Varianz in Mehrfachausführungen des Verfahrens 100 durch die mögliche Vielfalt an (weiteren) Prompts. Alternativ oder zusätzlich besteht Varianz durch unterschiedliche Kombinationen verschiedener Eingabeartefakte (z.B. nur Code, mit Anforderungen der Spezifikation, etc.). Werden (zum Beispiel durch unabhängige Mehrfachausführungen) doch statisch feststellbare mehrfach vorkommende Refaktorierungsvorschläge erzeugt, können sie aussortiert werden.

Offenbart wird weiterhin ein computer-implementiertes Verfahren 200 zum weiteren Trainieren eines Maschinenlernmodells 30 und/oder eines weiteren Maschinenlernmodells 31, wobei das Maschinenlernmodell 30 dafür ausgelegt ist, einen Code 10 einer Software zumindest basierend auf dem Code 10 und einem Prompt 20 zu refaktorieren 140 und gegebenenfalls das weitere Maschinenlernmodell 31 dafür ausgelegt ist, mindestens einen Refaktorierungsvorschlag 50 zur Refaktorierung des Code 10 zumindest basierend auf dem Code 10 und einem weiteren Prompt 21 zu erzeugen 130. Das Verfahren 200 umfasst Anpassen des Maschinenlernmodells 30 und/oder weiteren Maschinenlernmodells 31 zumindest basierend auf mindestens einem refaktorierten Code 40 und mindestens einem Bewertungsergebnis, wobei das mindestens eine Bewertungsergebnis durch Bewerten 150 des mindestens einen refaktorierten Code 40 resultiert. Insbesondere wird ein computer-implementiertes Verfahren 200 zum weiteren Trainieren eines Maschinenlernmodells 30 offenbart, wobei das Maschinenlernmodell 30 dafür ausgelegt ist, einen Code 10 einer Software zumindest basierend auf dem Code 10 und einem Prompt 20 zu refaktorieren 140. Dieses Verfahren 200 umfasst Anpassen des Maschinenlernmodells 30 zumindest basierend auf mindestens einem refaktorierten Code 40 und mindestens einem Bewertungsergebnis, wobei das mindestens eine Bewertungsergebnis durch Bewerten 150 des mindestens einen refaktorierten Code 40 resultiert.

Alternativ oder zusätzlich wird ein computer-implementiertes Verfahren 200 zum weiteren Trainieren eines weiteren Maschinenlernmodells 31 offenbart, wobei das weitere Maschinenlernmodell 31 dafür ausgelegt ist, mindestens einen Refaktorierungsvorschlag 50 zur Refaktorierung des Code 10 zumindest basierend auf dem Code 10 und einem weiteren Prompt 21 zu erzeugen 130. Das Verfahren 200 umfasst Anpassen des weiteren Maschinenlernmodells 31 zumindest basierend auf mindestens einem refaktorierten Code 40 und mindestens einem Bewertungsergebnis, wobei das mindestens eine Bewertungsergebnis durch Bewerten 150 des mindestens einen refaktorierten Code 40 resultiert. Alternativ oder zusätzlich wird ein computer-implementiertes Verfahren 200 zum weiteren Trainieren eines Maschinenlernmodells 30 und eines weiteren Maschinenlernmodells 31, wobei das Maschinenlernmodell 30 dafür ausgelegt ist, einen Code 10 einer Software zumindest basierend auf dem Code 10 und einem Prompt 20 zu refaktorieren 140 und das weitere Maschinenlernmodell 31 dafür ausgelegt ist, mindestens einen Refaktorierungsvorschlag 50 zur Refaktorierung des Code 10 zumindest basierend auf dem Code 10 und einem weiteren Prompt 21 zu erzeugen 130. Das Verfahren 200 umfasst Anpassen des Maschinenlernmodells 30 und/oder weiteren Maschinenlernmodells 31 zumindest basierend auf mindestens einem refaktorierten Code 40 und mindestens einem Bewertungsergebnis, wobei das mindestens eine Bewertungsergebnis durch Bewerten 150 des mindestens einen refaktorierten Code 40 resultiert.

Das Bewerten 150 kann, muss aber nicht Teil des Verfahrens 200 sein. Der mindestens eine refaktorierte Code 40 kann nach dem Verfahren 100 für die automatisierte Refaktorierung des Code 10 der Software erzeugt 140 und bewertet 150 worden sein. Das Verfahren 200 kann, muss aber nicht eine Fortsetzung des Verfahrens 100 sein.

Alternativ oder zusätzlich kann das Verfahren 100 via ein angepasstes Maschinenlernmodell und/oder ein angepasstes weiteres Maschinenlernmodell erneut ausgeführt werden. Insbesondere kann das Maschinenlernmodell 30 und/oder das weitere Maschinenlernmodell 31 zwischen Mehrfachausführungen des Verfahrens 100 nach dem Verfahren 200 angepasst werden.

Das Anpassen des Maschinenlernmodells 30 und/oder des weiteren Maschinenlernmodells 31 kann zumindest auf mindestens einen zu refaktorierenden Code 10 sowie mindestens auf einem Prompt 20 und/oder auf einem weiteren Prompt 21 basieren.

Das Maschinenlernmodell 30 und/oder das weitere Maschinenlernmodell 31 können durch überwachtes Learning angepasst werden. Eine solche Anpassung des Maschinenlernmodells 30 und/oder des weiteren Maschinenlernmodells 31 kann als überwachtes Finetuning gesehen werden. Dank des Finetuning kann ein generisches Maschinenlernmodell, das zum Beispiel auf ein allgemeines Maschinensprachverständnis trainiert worden ist, anwendungsspezifisch, d.h. hier im Hinblick auf das Erzeugen von Refaktorierungsvorschlägen und/oder refaktoriertem Code angepasst werden.

Das Finetuning des Maschinenlernmodells 30 und/oder des weiteren Maschinenlernmodells 31 kann, muss aber nicht einer weiteren Anpassung des Maschinenlernmodells 30 und/oder des weiteren Maschinenlernmodells 31 durch unüberwachtes (Reinforcement) Learning vorausgehen.

Alternativ oder zusätzlich kann das Anpassen des Maschinenlernmodells 30 und/oder weiteren Maschinenlernmodells 31 zumindest basierend auf dem mindestens einen refaktorierten Code 40 und dem mindestens einen Bewertungsergebnis Berechnen mindestens einer Belohnung (englisch: reward) zumindest basierend auf dem mindestens einen Bewertungsergebnis und Anpassen des Maschinenlernmodells 30 und/oder weiteren Maschinenlernmodells 31 zumindest basierend auf dem mindestens einen refaktorierten Code 40 und der mindestens einen Belohnung umfassen. Eine solche Anpassung des Maschinenlernmodells 30 und/oder des weiteren Maschinenlernmodells 31 kann als unüberwachtes (Reinforcement) Learning gesehen werden. Dadurch kann ein generisches Maschinenlernmodell, das zum Beispiel auf ein allgemeines Maschinensprachverständnis trainiert worden ist, und/oder ein solches Modell nach Finetuning, anwendungsspezifisch, d.h. hier im Hinblick auf das Erzeugen von Refaktorierungsvorschlägen und/oder refaktoriertem Code (weiter) angepasst werden. Dadurch kann das Maschinenlernmodell 30 und/oder das weitere Maschinenlernmodell 31 noch besser an den Anwendungsfall des Refaktorieren von Code angepasst werden.

Eine Belohnung kann ein Parameter, insbesondere ein numerischer Parameter sein, der vergleichbar zu anderen Parametern ist, die ebenfalls Belohnungen sind. Eine Belohnung kann zum Beispiel größer, gleich oder kleiner als eine andere Belohnung sein.

Die mindestens eine Belohnung kann größer sein, wenn das mindestens eine Bewertungsergebnis besser ist, und die mindestens eine Belohnung kann niedriger sein, wenn das mindestens eine Bewertungsergebnis schlechter ist.

Ein Bewertungsergebnis kann schlechter, insbesondere schlecht sein, wenn bereits eine Prüfung, auf der das Bewertungsergebnis basiert, negativ ausgefallen ist, d.h. z.B. nicht bestanden wurde. Alternativ oder zusätzlich kann ein Bewertungsergebnis besser, insbesondere gut sein, wenn alle Prüfungen, positiv ausgefallen, d.h. z.B. bestanden wurden.

Das Maschinenlernmodell 30 und/oder das weitere Maschinenlernmodell 31 können zumindest basierend auf einer Vielzahl von refaktoriertem Code und einer Vielzahl dazugehöriger Belohnungen angepasst werden. Das Verfahren kann hier Berechnen der Belohnungen zumindest basierend auf einer Vielzahl von Bewertungsergebnissen je refaktoriertem Code umfassen. In anderen Worten, die Belohnung für einen refaktorierten Code braucht nicht nur von dessen Bewertungsergebnis abzuhängen, sondern kann auch auf einem oder mehreren Bewertungsergebnisse zu anderem refaktorierten Code basieren. Eine oder mehrere Belohnungen (d.h. die Höhe derselben) kann zum Beispiel von einer Anzahl der Bewertungsergebnisse abhängen. Alternativ oder zusätzlich können eine oder mehrere Belohnungen von einer Anzahl von besseren Bewertungsergebnissen und von einer Anzahl von schlechteren Bewertungsergebnissen, insbesondere von einem Ungleichgewicht zwischen besseren und schlechteren Bewertungsergebnissen abhängen. Alternativ oder zusätzlich, können zunächst Belohnungen je Bewertungsergebnis berechnet werden und dann basierend auf anderen Bewertungsergebnissen angepasst und/oder verrechnet werden.

Das Anpassen des Maschinenlernmodells 30 und/oder weiteren Maschinenlernmodells 31 kann auf einem Reinforcement Learning Algorithmus wie zum Beispiel Proximal Policy Optimization (PPO) basieren.

Ein Teil des Maschinenlernmodells 30 und/oder ein Teil des weiteren Maschinenlernmodells 31 kann (gewollt) nicht angepasst werden, d.h. fixiert werden. Hier wird dann nur ein anderer Teil des Maschinenlernmodells 30 und/oder ein Teil des weiteren Maschinenlernmodells 31 angepasst.

Zum Beispiel können bestimmte Parameter wie z.B. Gewichte und/oder Verzerrungen, insbesondere Gewichte und/oder Verzerrungen auf früheren Schichten des Maschinenlernmodells 30 und/oder des weiteren Maschinenlernmodells 31 nicht angepasst, d.h. fixiert werden. Zum Beispiel können die Anpassungen auf hintere Schichten des Maschinenlernmodells 30 und/oder des weiteren Maschinenlernmodells 31 beschränkt werden, in denen Refaktorierungsvorschläge ausgearbeitet und/oder das Refaktorieren durchgeführt werden. Dadurch kann sichergestellt werden, dass das Maschinenlernmodell 30 und/oder das weitere Maschinenlernmodell 31 sich nicht im Hinblick auf das Maschinensprachverständnis über Gebühr verschlechtert. Andererseits kann eine Verschlechterung des Maschinensprachverständnis insoweit durch das Anpassen angestrebt werden, als es keine Rolle für das Refaktorieren des Code spielt. Zum Beispiel ist (üblicherweise) das Maschinensprachverständnis von Shakespeare-Englisch nicht für das Refaktorieren von Code erforderlich.

Das Verfahren 200 kann über die elektronische Programmierumgebung gesteuert werden. Insbesondere können das Maschinenlernmodell 30 und/oder das weitere Maschinenlernmodells 31 via die elektronische Programmierumgebung weiter angepasst werden.

Offenbart wird weiterhin ein Computer-System, das dafür ausgelegt ist, das computer-implementierte Verfahren 100 für die automatisierte Refaktorierung von Code 10 einer Software auszuführen. Alternativ oder zusätzlich kann das Computer-System dafür ausgelegt sein, das computer-implementierte Verfahren 200 zum weiteren Trainieren eines Maschinenlernmodells 30 und/oder weiteren Maschinenlernmodells 31 auszuführen. Insbesondere kann das Computer-System dafür ausgelegt sein, das computer-implementierte Verfahren 100 für die automatisierte Refaktorierung von Code 10 einer Software und (z.B. im Anschluss) das computer-implementierte Verfahren 200 zum weiteren Trainieren eines Maschinenlernmodells 30 und/oder weiteren Maschinenlernmodells 31 auszuführen. Das Computer-System kann einen Prozessor und/oder einen Arbeitsspeicher umfassen.

Offenbart wird weiterhin ein Computer-Programm, das dafür ausgelegt ist, das computer-implementierte Verfahren 100 für die automatisierte Refaktorierung von Code 10 einer Software auszuführen. Alternativ oder zusätzlich kann das Computer-Programm dafür ausgelegt sein, das computer-implementierte Verfahren 200 zum weiteren Trainieren eines Maschinenlernmodells 30 und/oder weiteren Maschinenlernmodells 31 auszuführen. Insbesondere kann das Computer-Programm dafür ausgelegt sein, das computer-implementierte Verfahren 100 für die automatisierte Refaktorierung von Code 10 einer Software und (z.B. im Anschluss) das computer-implementierte Verfahren 200 zum weiteren Trainieren eines Maschinenlernmodells 30 und/oder weiteren Maschinenlernmodells 31 auszuführen. Das Computer-Programm kann z.B. in interpretierbarer oder in kompilierter Form vorliegen. Es kann (auch in Teilen) zur Ausführung z.B. als Bit- oder Byte-Folge in den RAM eines Computers geladen werden.

Offenbart wird weiterhin ein computer-lesbares Medium oder Signal, das das Computer-Programm speichert und/oder enthält. Das Medium kann z.B. eines von RAM, ROM, EPROM, HDD, SSD, ... umfassen, auf/in dem das Signal gespeichert wird.

## Patentansprüche

1. Computer-implementiertes Verfahren (100) für die automatisierte Refaktorierung von Code einer Software, umfassend:
- Refaktorieren (140), via ein Maschinenlernmodell (30), des Code (10) der Software zumindest basierend auf dem Code (10) und einem Prompt (20), wobei der Code (10) refaktoriert wird;
- Bewerten (150) des refaktorierten Code (40), wobei ein Bewertungsergebnis resultiert.

2. Verfahren (100) nach Anspruch 1, wobei das Refaktorieren (140) des Code (10) der Software Umsetzen (141), via das Maschinenlernmodell (30), mindestens eines Refaktorierungsvorschlags (50) umfasst, wobei das Verfahren umfasst:
- Erzeugen (130), via ein weiteres Maschinenlernmodell (31), des mindestens einen Refaktorierungsvorschlags (50) zur Refaktorierung des Code (10) zumindest basierend auf dem Code (10) und einem weiteren Prompt (21).

3. Verfahren (100) nach Anspruch 1 oder 2, wobei die Software dafür ausgelegt ist, ein technisches System, insbesondere ein cyber-physisches System, insbesondere mindestens eine Recheneinheit eines Fahrzeugs, zu steuern, zu regeln und/oder zu überwachen.

4. Verfahren (100) nach einem der vorhergehenden Ansprüche, umfassend:
- Beibehalten (160) des refaktorierten Code (40) nach einem vorbestimmten Kriterium basierend auf dem Bewertungsergebnis;
- anderenfalls, optional, Verwerfen (161) des refaktorierten Code (40).

5. Verfahren (100) nach einem der vorhergehenden Ansprüche, wobei das Bewerten (150) des refaktorierten Code (40) umfasst:
- Prüfen, ob der Code (10) und der refaktorierte Code (40) im Hinblick auf deren Ausführung in mindestens einem vorbestimmten Testfall übereinstimmen.

6. Verfahren (100) nach Anspruch 5, wobei der mindestens eine vorbestimmte Testfall sich in einer früheren Iteration des Verfahrens (100) als differenzierend erwiesen hat.

7. Verfahren (100) nach einem der vorhergehenden Ansprüche, wobei das Bewerten (150) des refaktorierten Code (40) umfasst:
- Prüfen, ob der refaktorierte Code (40) mindestens einen vorbestimmten Contract erfüllt, optional via Bounded Model Checking und/oder Abstract Interpretation.

8. Verfahren (100) nach einem der vorhergehenden Ansprüche, wobei das Bewerten (150) des refaktorierten Code (40) umfasst:
- Prüfen, ob der Code (10) und der refaktorierte Code (40) funktional gleich sind, optional via Bounded Model Checking.

9. Verfahren (100) nach einem der vorhergehenden Ansprüche, wobei das Bewerten (150) des refaktorierten Code (40) umfasst:
- Prüfen, ob der refaktorierte Code (40) mindestens eine Zielanforderung erfüllt.

10. Verfahren (100) nach Anspruch 9, wobei das Prüfen, ob der refaktorierte Code (40) die mindestens eine Zielanforderung erfüllt, umfasst:
- Anwenden von Code- und/oder Testmetriken auf den refaktorierten Code (40), insbesondere Berechnen eines Wartbarkeitsindex basiert.

11. Computer-implementiertes Verfahren (200) zum weiteren Trainieren eines Maschinenlernmodells (30) und/oder weiteren Maschinenlernmodells (31), wobei das Maschinenlernmodell (30) dafür ausgelegt ist, einen Code (10) einer Software zumindest basierend auf dem Code (10) und einem Prompt (20) zu refaktorieren (140), und;
das weitere Maschinenlernmodell (31) dafür ausgelegt ist, mindestens einen Refaktorierungsvorschlag (50) zur Refaktorierung des Code (10) zumindest basierend auf dem Code (10) und einem weiteren Prompt (21) zu erzeugen (130); das Verfahren (200) umfassend:
- Anpassen des Maschinenlernmodells (30) und/oder weiteren Maschinenlernmodells (31) zumindest basierend auf mindestens einem refaktorierten Code (40) und mindestens einem Bewertungsergebnis, wobei das mindestens eine Bewertungsergebnis durch Bewerten (150) des mindestens einen refaktorierten Code (40) resultiert;
wobei der mindestens eine refaktorierte Code (40) nach dem Verfahren (100) für die automatisierte Refaktorierung des Code (10) der Software nach einem der vorhergehenden Ansprüche erzeugt (140) und bewertet (150) wurde.

12. Verfahren (200) nach Anspruch 11, wobei das Anpassen des Maschinenlernmodells (30) und/oder weiteren Maschinenlernmodells (31) zumindest basierend auf dem mindestens einen refaktorierten Code (40) und dem mindestens einen Bewertungsergebnis umfasst:
- Berechnen mindestens einer Belohnung zumindest basierend auf dem mindestens einen Bewertungsergebnis;
- Anpassen des Maschinenlernmodells (30) und/oder weiteren Maschinenlernmodells (31) zumindest basierend auf dem mindestens einen refaktorierten Code (40) und der mindestens einen Belohnung.

13. Computer-System, dafür ausgelegt,
das computer-implementierte Verfahren (100) für die automatisierte Refaktorierung von Code (10) einer Software nach einem der Ansprüche 1 bis 10 und/oder
das computer-implementierte Verfahren (200) zum weiteren Trainieren eines Maschinenlernmodells (30) und/oder weiteren Maschinenlernmodells (31) nach Anspruch 11 oder 12 auszuführen.

14. Computer-Programm, dafür ausgelegt,
das computer-implementierte Verfahren (100) für die automatisierte Refaktorierung von Code (10) einer Software nach einem der Ansprüche 1 bis 10 und/oder
das computer-implementierte Verfahren (200) zum weiteren Trainieren eines Maschinenlernmodells (30) und/oder weiteren Maschinenlernmodells (31) nach Anspruch 11 oder 12 auszuführen.

15. Computer-lesbares Medium oder Signal, das das Computer-Programm nach Anspruch 14 speichert und/oder enthält.
